Europäisches Patentamt

European Patent Office

Office européen des brevets

(11) Veröffentlichungsnummer : **0 021 069**
**B1**

(12) **EUROPÄISCHE PATENTSCHRIFT**

(45) Veröffentlichungstag der Patentschrift :
13.10.82

(21) Anmeldenummer : 80102926.5

(22) Anmeldetag : 24.05.80

(51) Int. Cl.³ : **B 60 R 13/06, B 60 J 1/17**

(54) Scheibenführung in einem Fahrzeug.

(30) Priorität : 15.06.79 DE 2924309

(43) Veröffentlichungstag der Anmeldung :
07.01.81 (Patentblatt 81/01)

(45) Bekanntmachung des Hinweises auf die Patenterteilung : 13.10.82 Patentblatt 82/41

(84) Benannte Vertragsstaaten :
FR GB IT

(56) Entgegenhaltungen :
DE A 2 840 811
DE B 2 809 721
FR A 2 271 464
US A 3 083 048
US A 3 385 000
US A 3 703 053

(73) Patentinhaber : AUDI NSU AUTO UNION Aktiengesellschaft
Postfach 220 Ettingerstrasse
D-8070 Ingolstadt (DE)

(72) Erfinder : Egbert, Rossié
Elias-Holl-Strasse 16
D-8070 Ingolstadt (DE)
Erfinder : Hahn, Michael
Schiehensteinstrasse 15a
D-8073 Kösching (DE)
Erfinder : Schemperg, Lutz, Dr.
Biberg 42
D-8079 Kipfenberg (DE)

Imprimerie Jouve, 18, rue St-Denis, 75001 Paris, France

Scheibenführung in einem Fahrzeug

Die Erfindung bezieht sich auf eine Scheibenführung für eine Fahrzeugtür, insbesondere für einen Personenkraftwagen, welche im Bereich der Verglasung mit glatter Außenfläche ausgebildet ist.

Bei den Personenkraftwagen in Coupeausführung ist es bekannt, die Türen im Bereiche der Verglasung mit einer solchen glatten Außenfläche auszubilden. Dabei liegt die Scheibe unmittelbar gegen Dichtungen an, die im Türausschnitt befestigt sind. Bei sehr hohen Geschwindigkeiten heben jedoch bei diesen Fahrzeugen die Scheiben von ihren Dichtungen ab.

Bei den Ausführungsbeispielen der in der nicht zum Stand der Technik gehörenden, am 13. September 1979 veröffentlichten DE-B-2 809 721 beschriebenen Scheibenführungen sind die Dichtungen am Karosseriekörper bzw. an den als Strangpreßteil ausgeführten Führungsleisten, die gleichzeitig einen an der Tür angeordneten Rahmen bilden, befestigt.

Bei der erstgenannten Anordnung ist zwar eine Dichtung ausreichend ; diese wird jedoch in ungünstiger Weise durch wechselnde Belastungen beansprucht, so etwa durch das Zuschlagen der Türe, das Schließen der Scheibe, durch die Vorspannung der Scheibe usw.

Bei der zweiten oben genannten Anordnung sind bei einer praktischen Ausführung zwei Dichtungen verwendet worden, wobei die eine die Scheibe gegen den Rahmen abdichtet, die andere den Rahmen gegen den Karosseriekörper. Diese Dichtungen sind an einem Strangpreßteil befestigt, welches einteilig Führungsschienen und einen Rahmen bildet. Ein solches Teil ist in der Herstellung aufwendig und aufgrund der verwendbaren Materialien teuer. Der mögliche Werkstoff bestimmt auch den Reibungskoeffizienten des in den Führungsleisten bewegten Gleitstückes.

Beide oben genannten Ausführungen von Türen weisen im Bereich ihrer Verglasung eine glatte Außenfläche auf, sind jedoch in Bezug auf die Abdichtung problematisch.

Beim Gegenstand der vorbekannten FR-A-2 271 464 — bei welchem zwischen Scheibe und Türrahmen eine Dichtung befestigt ist und die der Scheibe abgewandte Seite des Rahmens eine Anlagefläche für eine zweite, am Karosseriekörper befestigte Dichtung bildet — sind zwar keine Abdichtungsprobleme zu erwarten, jedoch erfordert diese Ausführungsform eine weitere am Türrahmen befestigte und gegen den Karosseriekörper abdichtende Dichtung. Außerdem wird keine glatte Außenfläche im Bereich der Verglasung erreicht.

Aus der US-A-3 703 053 ist schließlich eine im Bereich der Verglasung mit glatter Außenfläche ausgebildete Fahrzeugtüre bekannt, wobei an der Scheibe wenigstens ein mit ihr verbundenes Gleitstück angeordnet ist, welches in einer türfesten Führungsleiste auf- und abwärtsbewegbar geführt und direkt an der Scheibe im Abstand von deren Rand befestigt ist, so daß der Rand der Scheibe selbst zum Eingriff mit einer die Scheibe insgesamt gegen den Karosseriekörper abdichtenden Dichtung freiliegt. Bei dieser, abgesehen von einer an der Außenseite der Scheibe angeordneten Führungsleiste rahmenlosen Scheibenführung, ist eine Dichtung vorgesehen, welche am Türausschnitt befestigt ist und bei geschlossener Scheibe an dieser anliegt. Die Dichtung wird durch die wechselnden auf sie wirkenden Belastungen sehr stark beansprucht. Die Aufnahme von größeren Toleranzen, die in diesem Bereich häufig auftreten, und eine leichtgängige Scheibe im Verbindung mit einer guten Abdichtung lassen sich hier kaum realisieren.

Der Erfindung liegt die Aufgabe zugrunde, eine verbesserte Scheibenführung für Scheiben, die mit den umgebenden Karosserieteilen eine weitgehend bündige Außenfläche bilden, zu schaffen, die bei hoher Funktionssicherheit wirtschaftlich herstellbar ist.

Die Aufgabe wird mit den Merkmalen des Anspruchs 1 gelöst. Es hat sich gezeigt, daß eine an der Türe angeordnete Dichtung, welche den Fensterrahmen gegenüber dem Karosseriekörper abdichtet, in ungünstiger Weise beansprucht wird, da sie nicht nur zusammengedrückt, sondern beim Öffnen und Schließen der Türe zusätzlich noch in anderen als den vorgesehenen Richtungen gezogen oder gequetscht wird, insbesondere bei schlecht eingepaßten Türen. Dies hat nicht nur eine verkürzte Lebensdauer der Dichtung zur Folge, sondern erhöht auch die Betätigungskräfte beim Schließen der Türe.

Durch die erfindungsgemäße Ausbildung ist es möglich, alle Teile entsprechend ihrem Verwendungszweck optimal auszuführen. So wird die Dichtung, welche gegen die Innenseite der Scheibe drückt, nur durch die bewegte Scheibe belastet, während die zweite, zwischen Rahmen und Karosseriekörper angeordnete Dichtung nur beim Schließen der Türe in der genau definierten Richtung beansprucht wird.

Besonders vorteilhaft ist, wenn die Dichtung an ihrer der Scheibe zugewandten Seite eine Anlauffläche für die in Schließstellung bewegte Scheibe aufweist. Durch die Ausbildung einer durchgehenden Anlauffläche wird in einfacher Weise erreicht, daß die nach oben bewegte Scheibe kontinuierliche und zuverlässig in ihre Schließstellung bewegt werden kann.

Gemäß einer Weiterbildung der Erfindung drückt die Dichtung gegen die Innenseite der Scheibe und weist eine am oberen Rand der Dichtung angeformte Lippe auf, die sich bei geschlossener Türe an dem umgebenden Karosseriekörper anlegt. Die Ausbildung der genannten Lippe kommt nicht nur optische Bedeutung zu, indem sie den Spalt zwischen Scheibe und Karosseriekörper überbrückt ; sie wirkt auch Windgeräuschen bei höheren Geschwindigkeiten entgegen. Ohne Einfluß auf die Türbetätigungskräfte zu nehmen, verhindert sie zudem, daß Wasserteilchen auf den oberen Rand des Rahmens gelangen und beim Öffnen der Türe nach unten abtropfen können.

Eine vorteilhafte Weiterführung des Erfindungsgedankens besteht darin, die Anlauffläche als Bestandteil eines Dichtelemententrägers auszuführen, der zusammen mit der Dichtung eine Montageeinheit bildet, die kostengünstig verbaut und hergestellt werden kann und bei der ein sicherer Übergang von der Anlauffläche zur Dichtung gewährleistet ist.

Eine weitere Montageerleichterung besteht darin, wenn der Dichtelemententräger federnd nachgiebige Rastteile aufweist, die in Hinterschneidungen des Rahmens einrasten. Gegenüber Dichtleisten, die nur durch Klemmwirkung gehalten sind, weist die vorbeschriebene Anordnung den großen Vorteil auf, daß das Einrasten wahrgenommen werden kann und dadurch verhindert wird, daß die Dichtungen nur unvollständig aufgeschoben werden.

Ein Ausführungsbeispiel der Erfindung ist in den Zeichnungen dargestellt.

Es zeigt :

Figur 1 eine Seitenansicht des Türbereiches eines Personenkraftwagens,

Figur 2 einen Schnitt längs der Linie II-II in Fig. 1,

Figur 3 einen Schnitt längs der Linie III-III in Fig. 1.

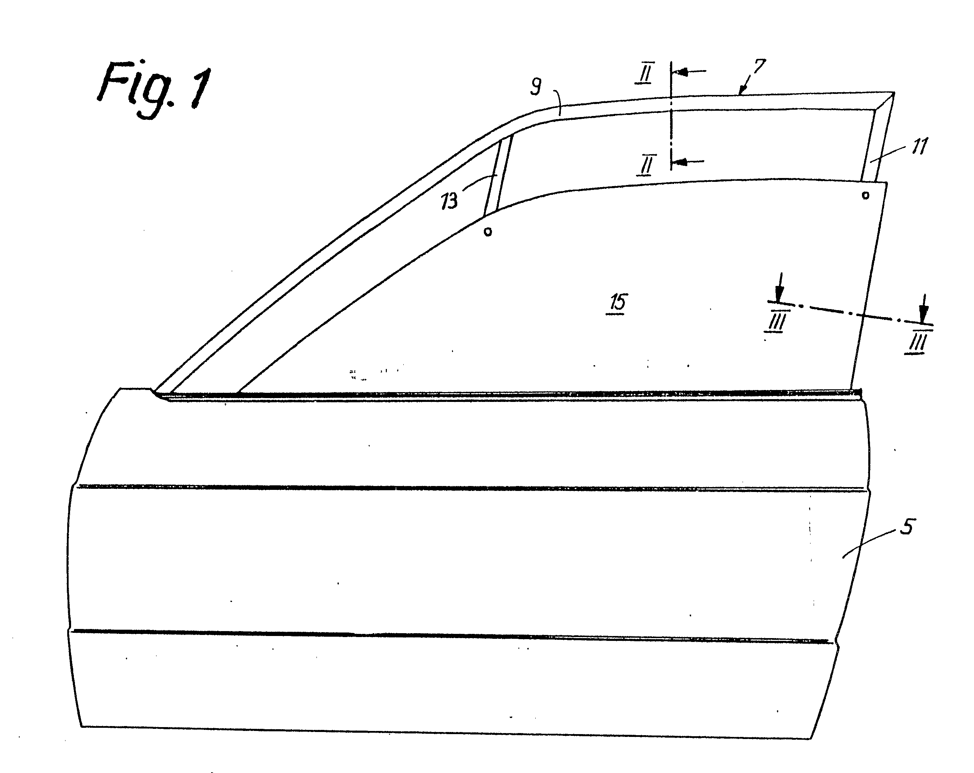

Gemäß Fig. 1 weist eine Seitentüre eines Personenkraftwagens einen Türkörper 5 auf, aus dem ein Türrahmen 7 vorsteht. Der Türrahmen 7 ist in herkömmlicher Weise mit dem Türkörper 5 verbunden und weist einen oberen Schenkel 9 und einen hinteren Schenkel 11 auf. Im Bereich von etwa 2/5 der Türlänge erstreckt sich zwischen der Stelle, an der der obere Schenkel 9 von einem waagerechten in einen abwärts verlaufenden Teil übergeht, und dem Türkörper 5 eine Führungsleiste 13.

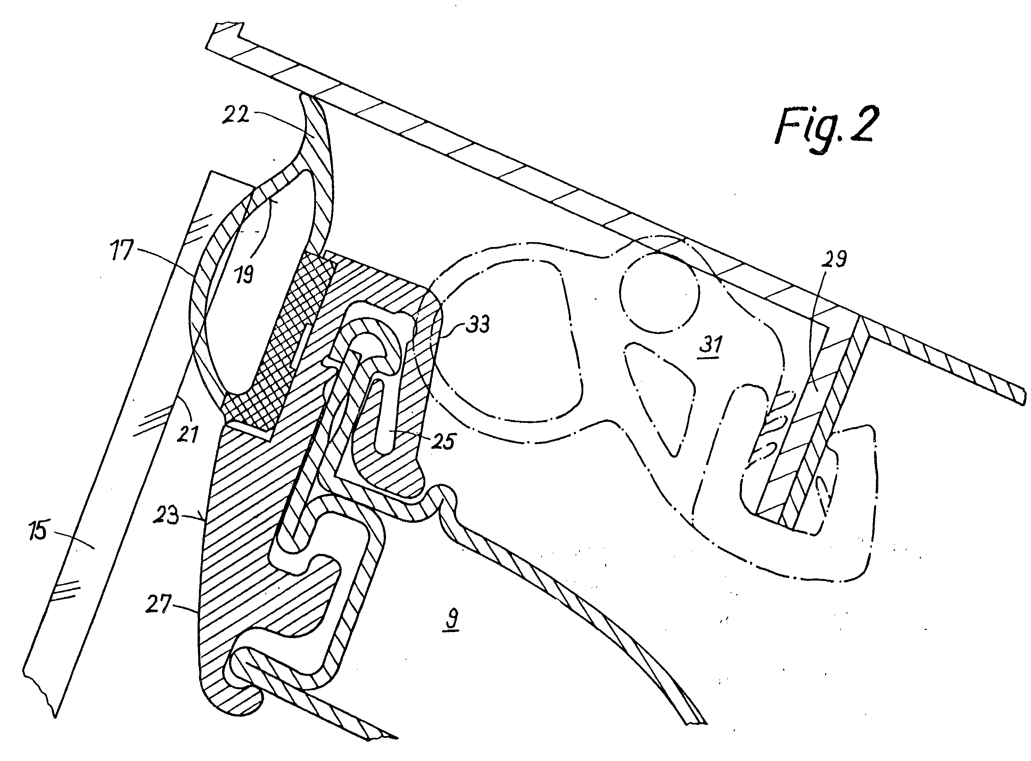

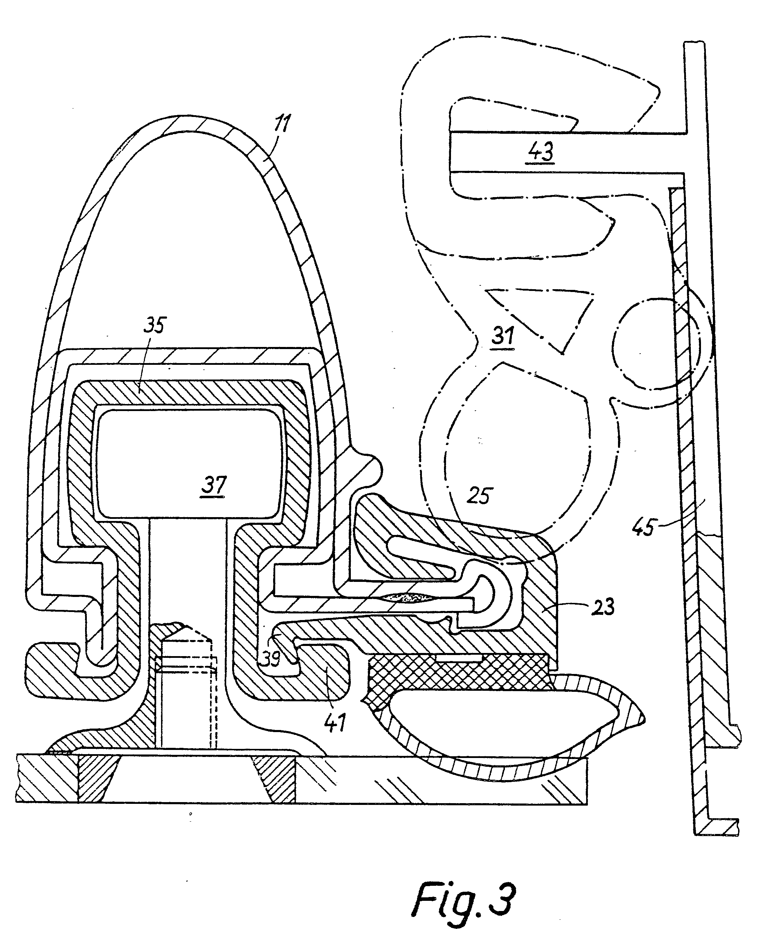

In der Türe ist eine Scheibe 15 mittels eines herkömmlichen und deshalb nicht im einzelnen beschriebenen Mechanismus auf- und abwärtsbewegbar geführt. Die Führung und Abdichtung der Scheibe ist im einzelnen aus den Figuren 2 und 3 ersichtlich.

Der in Fig. 2 dargestellte Schnitt durch den oberen Schenkel 9 des Türrahmens 7 zeigt die Scheibe 15 in Schließstellung. Dabei drückt die Dichtfläche 17 einer als ellipsenförmiger Hohlkörper ausgeführten Dichtung 19 gegen die Innenseite 21 im Randbereich der Scheibe 15. An die Dichtung 19 ist eine Lippe 22 angeformt, die den Spalt zwischen Scheibe und Karosseriekörper überbrückt.

Gehalten wird die Dichtung 19 durch einen Dichtelemententräger 23, mit dem sie durch Klebung verbunden ist und mit dem sie zusammen eine Montageeinheit bildet. Das Verbinden des Dichtelemententrägers 23 mit dem oberen Schenkel 9 des Türrahmens 7 geschieht durch Formschluß und durch ein federnd nachgiebiges Rastteil (Klammerteil 25), welches in Hinterschneidungen des als Blechpreßteil ausgeführten oberen Schenkels 9 greift.

Der untere Teil des Dichtelemententrägers 23 ist als Anlauffläche 27 für die in Schließstellung bewegte Scheibe ausgebildet. Durch diese Anlauffläche wird die in Richtung der Dichtung vorgespannte Scheibe 15 zuverlässig und ohne Unterbrechungen der Dichtung 19 zugeführt.

Zur Abdichtung des oberen Schenkels 9 des Türrahmens 7 gegenüber dem Dachrahmen weist letzterer einen Flansch 29 auf, auf dem eine zweite Dichtung 31 aufgeschoben ist. Ein Bereich der Dichtung 31 wirkt bei geschlossener Türe mit einer am Dichtelemententräger 23 ausgebildeten Anlagefläche 33 zusammen.

Wie aus Fig. 3 unmittelbar ersichtlich, erstreckt sich die Dichtung 19 entlang des gesamten, aus dem Türkörper 5 herausragenden Teil des Türrahmens 7. Gleichsam ist auch der Dichtelemententräger 23 als umlaufendes Teil ausgeführt, nicht jedoch die Anlauffläche 27, die im wesentlichen nur im Bereich des oberen Schenkels 9 des Fensterrahmens ausgebildet ist.

Fig. 3 zeigt auch die Führung der Scheibe 15 im hinteren Schenkel 11 des Türrahmens 7. Dazu ist im Schenkel 11 eine ein Hohlprofil bildende Führungsleiste 35 befestigt, in der ein mit der Scheibe 15 verbundenes Gleitstück 37 längsverschieblich geführt ist. Die Befestigung der Dichtung 19 am hinteren Schenkel 11 des Fensterrahmens erfolgt in ähnlicher Weise wie am oberen Schenkel 9 über den Dichtelemententräger 23. Neben dem Klammerteil 25 ist am Dichtelemententräger zusätzlich eine Raste 39 ausgebildet, die einen Vorsprung 41 der Führungsleiste 35 hintergreift.

Unverändert in ihrem Querschnitt verläuft auch im senkrechten Bereich des Türausschnittes die an einem Flansch 43 des mittleren Pfostens 45 der Fahrzeugkarosserie befestigte Dichtung 31 und dichtet dadurch den hinteren Schenkel 11 des Türrahmens 7 gegenüber den mittleren Pfosten 45 ab.

## Ansprüche

1. Scheibenführung für eine Fahrzeugtüre, insbesondere für einen Personenkraftwagen, welche im Bereich der Verglasung mit glatter Außenfläche ausgebildet ist, mit einer Scheibe (15), an deren Innenseite (21) in Abstand vom Scheibenrand wenigstens ein Gleitstück (37) befestigt ist, welches in einer türfesten Führungsleiste (35) auf- und abwärtsbewegbar geführt ist, so daß der Rand der Scheibe selbst zum Eingriff mit einer die Scheibe insgesamt gegen die Türe abdichtenen Dichtung (19) freiliegt, wobei die Dichtung (19) an einem mit der oder den Führungsleisten (13, 35) starr verbundenen Türrahmen (7) befestigt ist und die der Scheibe (15) abgewandte Seite des Türrahmens eine Anlagefläche (33) für eine zweite, am Karosseriekörper befestigte Dichtung (31) bildet.

2. Scheibenführung nach Anspruch 1, dadurch gekennzeichnet, daß die Dichtung (19) an ihrer der Scheibe (15) zugewandten Seite eine Anlauffläche (27) für die in Schließstellung bewegte Scheibe aufweist.

3. Scheibenführung nach Anspruch 1, dadurch gekennzeichnet, daß die Dichtung (19) gegen die Innenseite (21) der Scheibe (15) drückt und sich eine am oberen Rand der Dichtung angeformte Lippe (22) an den umgebenden Karosseriekörper anlegt.

4. Scheibenführung nach Anspruch 2, dadurch gekennzeichnet, daß die Anlauffläche (27) Bestandteil eines Dichtelemententrägers (23) ist, der zusammen mit der Dichtung (19) eine Montageeinheit bildet.

5. Scheibenführung nach Anspruch 4, dadurch gekennzeichnet, daß der Dichtelemententräger (23) federnd nachgiebige Rastteile (25, 39) aufweist, die in Hinterschneidungen des Türrahmens (7) einrasten.

## Claims

1. Window guide for the door of a motor vehicle, in particular for a passenger car, provided with a smooth outside surface in the area of the glass, with a glass pane (15), on whose inside surface (21) at least one guide piece (37) is attached at a distance from the edge of the glass pane, said guide piece running vertically in a guide channel (35) fixed to the door, so that the edge of the glass pane itself remains clear and comes into contact with a seal (19), which seals the whole of the glass pane against the door, said seal (19) being mounted on a door frame (7), which is rigidly fixed to the guide channel or channels (13, 35), and the side of the door frame which is remote from the glass pane (15) forms a contact surface (33) for a second seal (31) which is mounted on the vehicle body.

2. Window guide according to Claim 1, characterized in that the portion of the seal (19) facing the glass pane (15) is provided with a guide surface (27) to locate the glass pane as it is moved into its closed position.

3. Window guide according to Claim 1, characterized in that the seal (19) presses against the inside surface (21) of the glass pane (15) and that a lip (22) moulded on the upper side of the seal contacts the surrounding portion of the vehicle body.

4. Window guide according to Claim 2, characterized in that the guide surface (27) forms an integral part of a seal backing element (23), which is combined with the seal (19) to form a single subassembly.

5. Window guide according to Claim 4, characterized in that the seal backing element (23) is provided with resilient protrusions (25, 39), which engage positively in recesses provided behind the door frame (7).

## Revendications

1. Guide-glace pour une porte de véhicule, notamment pour une porte de voiture de tourisme, qui est réalisée avec une surface extérieure unie dans la région du vitrage, avec une glace (15) du côté intérieur (21) de laquelle est fixée, à distance du bord de la glace, au moins une pièce coulissante (37) qui est guidée dans son mouvement ascendant et descendant dans une barre de guidage (35) solidaire de la porte, de telle manière que le bord de la glace lui-même soit libre pour coopérer avec une garniture d'étanchéité (19) qui assure partout l'étanchéité de la glace à l'égard de la porte, la garniture d'étanchéité (19) étant fixée sur un cadre de porte (7) solidaire de la barre ou des barres de guidage (13, 35) et le côté du cadre de porte dirigé à l'opposé de la glace (15) formant une surface d'appui (33) pour une seconde garniture d'étanchéité (31) fixée au corps de carrosserie.

2. Guide-glace selon la revendication 1, caractérisé en ce que la garniture d'étanchéité (19) présente, sur un côté dirigé vers la glace (15), une surface d'attaque en pente douce (27) pour la glace dans son mouvement vers la position de fermeture.

3. Guide-glace selon la revendication 1, caractérisé en ce que la garniture d'étanchéité (19) porte contre le côté intérieur (21) de la glace (15) et présente une lèvre (22) qui est formée sur son bord supérieur et qui s'applique contre le corps de carrosserie qui l'entoure.

4. Guide-glace selon la revendication 2, caractérisé en ce que la surface d'attaque en pente douce (27) fait partie d'un support de garniture d'étanchéité (23) qui forme un ensemble de montage avec la garniture d'étanchéité (19).

5. Guide-glace selon la revendication 4, caractérisé en ce que le support de garniture d'étanchéité (23) comporte des parties d'enclenchement (25, 39) flexibles élastiquement, qui s'enclenchent dans des contre-dépouilles du cadre de porte (7).

**Fig. 1**

Fig.2

Fig.3